# EUROPEAN PATENT APPLICATION

(11) **EP 1 739 554 A1**
(43) Date of publication of application: **03.01.2007**
(21) Application number: 06253189.2
(22) Date of filing: 20.06.2006
(51) Int. Cl.: G06F 9/46

(54) **Service providing system, and client, server, and program for the same**

(30) Priority: 24.06.2005 JP 2005185367
(71) Applicant: Brother Kogyo Kabushiki Kaisha, Nagoya-shi, Aichi-ken 467-8561 (JP)
(72) Inventor: Enomoto, Katsunori, Brother Kogyo K. K., Mizuho-ku Nagoyai Aichi 467-8562 (JP); Matsuda, Makoto, Brother Kogyo K. K., Mizuho-ku Nagoyai Aichi 467-8562 (JP); Ohara, Kiyotaka, Brother Kogyo K. K., Mizuho-ku Nagoyai Aichi 467-8562 (JP); Aoki, Kazuma, Brother Kogyo K. K., Mizuho-ku Nagoyai Aichi 467-8562 (JP)
(74) Representative: Smith, Samuel Leonard

(57) **Abstract**

A service providing system includes a providing server that provides a service, and a client that receives the service. The providing server includes a first receiving system that receives a request signal for requesting to provide the service, a first sending system that sends a response signal for providing the service in response to the request signal being received, and a time information adding system that adds time information representing timing at which a next request signal is to be sent to the response signal that is sent from the first sending system when requesting the client to continuously send the request signal. The client includes a second sending system that sends the request signal to the providing server, a second receiving system that receives the response signal, and a control system that controls the sending system to send the request signal at the timing represented by the time information added to the received response signal.

## Description

### Cross-Reference to Related Application

This application claims priority from Japanese Patent Application No. 2005-185367, filed on June 24, 2005. The entire subject matter of the application is incorporated herein by reference.

### Technical Field

Aspects of the invention relate to a service providing system configured such that a service is provided to a client from a server.

### Background

Recently, there is proposed a network system for providing services for actualizing functions that clients (digital copy machines) do not have using a server (host computer) connected therewith via a network.

In the network system providing such services, as a so-called firewall is generally applied in order to ensure a security, such a technique that commands are sent to the server from the clients is employed.

Such a technique, which is called "polling", is applied, for example, to an electronic conference support system via the network.

However, according to the aforementioned conventional network system, a time interval between polling operations that is determined by the client is constant. Therefore, when the service providing system is configured such that the server can respond only to the polling from the client, there is a time lag between timings of the polling operation being performed by the client and the service to be provided by the server being available. Consequently, the server cannot provide the service to the client in a timely fashion (the server cannot respond immediately to the polling). In such a case, when the time interval between the polling operations is shortened to allow the server to respond immediately to the polling, unnecessary polling operations cause an increased load of a whole of the network system.

In addition, a certain kind of service to be provided to the client can certainly be provided with the server accepting the polling from the client again after executing a process corresponding to a response signal transmitted to the client therefrom for a predetermined time period. For example, in a weather forecast service to be provided, there is cited as a service corresponding to the aforementioned service such a service as to provide firstly weather forecast of the whole country for 10 seconds, secondly that of Tokyo for 10 seconds, thirdly that of Osaka for 10 seconds, and fourthly that of Nagoya for 10 seconds, repeatedly in series. However, in the same way as above, when the time interval between the polling operations is determined constant by the client, a predetermined service cannot be provided under a user-satisfying condition. In other words, to explain in accordance with the aforementioned example, when the time interval between the polling operations is a time of 0.5 seconds, the weather forecasts of the whole country, Tokyo, Osaka, and Nagoya are sequentially switched at intervals of 0.5 seconds, a user of the service cannot well understand information contained in the weather forecasts.

### Summary

Aspects of the invention are advantageous in that there can be provided an improved service providing system configured to certainly provide a service in a timely fashion without increasing a load to a network, devices provided in the system, and programs configured to allow the devices to function.

According to aspects of the present invention, there is provided a service providing system that includes a providing server configured to provide at least one service and a client configured to receive the at least one service to be provided from the providing server. The providing server includes: a first receiving system configured to receive a request signal for requesting the providing server to provide a service; a first sending system configured to send a response signal for providing the service to the client in response to the request signal being received by the first receiving system; and a time information adding system configured to add time information that represents timing at which a next request signal is to be sent to the response signal that is sent from the first sending system when requesting the client to continuously send the request signal for requesting to provide the service. The client includes: a second sending system configured to send the request signal to the providing server; a second receiving system configured to receive the response signal sent from the providing server; and a control system configured to control the second sending system to send the request signal at the timing represented by the time information included in the response signal received by the second receiving system.

Thereby, when requesting the client to continuously send the request signal, the providing server can specify the timing at which the next request signal is to be sent from the client with the time information included in the response signal sent from the providing server. Namely, the providing server can set the polling timing suitable for the status thereof.

According to the aforementioned service providing system, it is possible to certainly provide the service in a timely fashion without increasing a load of a network.

It is noted that, in this configuration, the time information adding system of the providing server is configured to add the time information representing the timing at which the next request signal is to be sent to the response signal, yet a configuration for determining the time information is not limited.

Optionally, the providing server may further include a database storing the time information corresponding to each of processes to be executed while providing the service associated with each of the processes. Optionally, the time information adding system may be configured to judge which process among the processes to be executed while providing the service the response signal is to be sent from the first sending system in, and add the time information stored in the database associated with the process specified by the judgment to the response signal.

Thereby, it is possible to set the time information suitable for each of the processes by storing the time information predetermined depending on each of the processes to be executed by the providing server or the client while the service is being provided in the database.

According to some aspects, it is possible to more certainly provide the service in a timely fashion without increasing a load of a network.

It is noted that the database referred to here is configured with the time information representing the transmission timing of the next request signal corresponding to each of the processes to be executed being stored therein associated with each of the processes to be executed. Therefore, for example, by storing the time information representing the transmission timing set to be delayed depending on the processing load of each of the processes in the database, the timing at which the request signal is to be sent from the client can be more delayed, as the response signal is sent while a process of a higher processing load that requires longer time to be completed is being executed. In other words, the request signal can be received at such timing that the providing server can certainly provide the service in a timely fashion (in this case, the service can be provided to the client immediately after the process to be executed by the providing server has been completed).

In this configuration, the database referred to when the time information adding system determines the transmission timing may be provided in the providing server. Further, the database may be provided in another network device capable of data communication with the providing server.

Optionally, the providing server may further include a load rate detecting system configured to detect a rate of a load for a processing capacity of the providing server, a load rate judging system configured to judge which range among a plurality of ranges predetermined on the basis of a level of the rate of the load for the processing capacity of the providing server the rate detected the load rate detecting system is in, and a database in which the time information determined depending on each of the plurality of ranges is stored associated with each of the plurality of ranges. Optionally, the time information adding system may be configured to determine the time information stored associated with the range specified by the load rate judging system in the database as the time information to be added.

Thereby, regardless of what a process to be executed by the providing server or the client while providing the service is, the time information can previously be set based upon the rate of the load for the processing capacity of the providing server with the time information stored in the database that is predetermined depending on each of the plurality of ranges.

According to some aspects, it is possible to more certainly provide the service in a timely fashion without increasing a load of a network.

It is noted that the database referred to here is configured with each of the ranges of the rate of the load for the processing capacity of the providing server being associated with the time information corresponding to each of the ranges. Therefore, for example, by storing the time information representing more delayed transmission timing for the range of higher rates, when the providing server sends the response signal while executing a process of a load close to the processing capacity of the providing server, the timing at which the next request signal is to be sent from the client can be set delayed. Accordingly, the providing server can receive the request signal at such timing that the providing server can sufficiently meet the request signal. In other words, the providing server can receive the request signal at such timing that the providing server certainly provide the service in a timely fashion (in this case, the providing server can provide the service to the client immediately after the process to be executed by the providing server has been completed).

It is noted that, in this configuration, the database referred to when the time information adding system determines the time information may be provided in the providing server. Further, the database may be provided in another network device capable of the data communication with the providing server.

According to another aspect of the present invention, there is provided a service providing system that includes a providing server configured to provide at least one service; and a client configured to receive the at least one service to be provided from the providing server. The providing server includes: a starting command sending system configured to return a first execution command for instructing to execute a process to be executed by the client for starting to provide a service, in response to a starting request for requesting to start to provide the service being received from the client; a continuing command sending system configured to sequentially return one of second execution commands for instructing to execute a corresponding one of processes to be executed by the client to receive the service to be provided every time receiving a continuing request for requesting to continue to provide the service from the client until having returned all of the second execution commands corresponding to all of the processes to be executed by the client to receive the service to be provided after the starting command sending system has returned the starting command; and a time information adding system configured to add time information that represents timing at which a next continuing request is to be sent to the second execution command returned from the continuing command sending system when requesting the client to continuously send the continuing request for requesting to continue to provide the service. The client includes: a starting request sending system configured to send the starting request to the providing server; a continuing request sending system configured to send the continuing request for requesting to continue to provide the service to the providing server, in response to the one of the processes corresponding to the second execution command having been completed in the case where the providing server has started to provide the service based on the starting request being sent from the starting request sending system; and a process executing system configured to execute a process corresponding to one of the first execution command returned by the starting command sending system in response to the starting request being sent from the stating request sending system and the second execution command returned by the continuing command sending system in response to the continuing request being sent from the continuing request sending system. The continuing request sending system is configured to send the continuing request to the providing server in accordance with the time information added to the second execution command, when the process corresponding to the second execution command has been completed.

Thereby, when requesting the client to continuously send the continuing request, the providing server can specify the timing at which the next continuing request is to be sent from the client with the time information added to the second execution command sent from the providing server. Namely, the providing server can set the polling timing (the timing at which the continuing request is to be sent from the client or the continuing request sending system) suitable for the status thereof.

According to the aforementioned service providing system, it is possible to certainly provide the service in a timely fashion without increasing a load of a network.

It is noted that, in this configuration, the time information adding system of the providing server is configured to add the time information representing the timing at which the next continuing request is to be sent to the second execution command, yet a configuration for determining the time information is not limited.

Optionally, the providing server may further include a database storing the time information corresponding to each of processes to be executed while providing the service associated with each of the processes. Optionally, the time information adding system may be configured to judge which process among the processes to be executed to receive the service the second execution command is to be sent from the continuing command sending system in, and add the time information stored in the database associated with the process specified by the judgment to the second execution command returned by the continuing command sending system.

Thereby, it is possible to set the time information suitable for each of the processes by storing the time information predetermined depending on each of the processes to be executed by the providing server or the client while the service is being provided in the database.

According to some aspects, it is possible to more certainly provide the service in a timely fashion without increasing a load of a network.

It is noted that the database referred to here is configured with the time information representing the transmission timing of the next request signal corresponding to each of the processes to be executed being stored therein associated with each of the processes to be executed. Therefore, for example, by storing the time information representing the transmission timing set to be delayed depending on the processing load of each of the processes in the database, the timing at which the request signal is to be sent from the client can be more delayed, as the response signal is sent while a process of a higher processing load that requires longer time to be completed is being executed. In other words, the request signal can be received at such timing that the providing server can certainly provide the service in a timely fashion (in this case, the service can be provided to the client immediately after the process to be executed by the providing server has been completed).

In this configuration, the database referred to when the time information adding system determines the transmission timing may be provided in the providing server. Further, the database may be provided in another network device capable of the data communication with the providing server.

According to a further aspect of the present invention, there is provided a client configured to communicate with a providing server that is configured to provide a service in response to a request signal for requesting to provide the service, the providing server being configured to add time information representing timing at which a next request signal is to be sent to a response signal for requesting the client to continuously send the request signal when providing the service, the client including a sending system configured to send the request signal to the providing server, a receiving system configured to receive the response signal sent from the providing server, and a control system configured to control the sending system to send the request signal at the timing represented by the time information included in the response signal received by the receiving system.

The client thus configured can serve as the client included in any of the aforementioned service providing system.

According to a further aspect of the present invention, there is provided a providing server configured to communicate with a client that is configured to send a request signal for requesting to provide a service, which includes: a receiving system configured to receive the request signal; a sending system configured to send a response signal for providing the service to the client in response to the request signal being received by the receiving system; and a time information adding system configured to add time information that represents timing at which a next request signal is to be sent to the response signal that is sent from the sending system when requesting the client to continuously send the request signal for requesting to provide the service.

The providing server thus configured can serve as the providing server included in any of the aforementioned service providing system.

According to a further aspect of the present invention, there is provided a computer program product including instructions configured readable by a computer, the computer being configured to communicate with a providing server configured to provide a service in response to a request signal for requesting to provide the service, the providing server being configured to add time information representing timing at which a next request signal is to be sent to a response signal for requesting to continuously send the request signal when providing the service, the instructions causing the computer to serve as: a sending system configured to send the request signal to the providing server; a receiving system configured to receive the response signal sent from the providing server; and a control system configured to control the sending system to send the request signal at the timing represented by the time information included in the response signal received by the receiving system.

The computer controlled with the aforementioned computer program product can serve as the client included in any of the aforementioned service providing system.

According to a further aspect of the present invention, there is provided a computer program product including instructions configured readable by a computer that is configured to communicate with a client configured to send a request signal for requesting to provide a service, the instructions causing the computer to serve as: a receiving system configured to receive the request signal; a sending system configured to send a response signal for providing the service to the client in response to the request signal being received by the receiving system; and a time information adding system configured to add time information that represents timing at which a next request signal is to be sent to the response signal that is sent from the sending system when requesting the client to continuously send the request signal for requesting to provide the service.

The computer controlled with the aforementioned computer program product can serve as the providing server included in any of the aforementioned service providing system.

The instructions included in the aforementioned computer program product, which includes strings of commands suitable for computer processing ordered with serial numbers, may previously be installed in each of devices such as the client and the providing server, and further, may be provided to each of the devices or a user who uses each of the devices through a recording medium such as an FD, CD-ROM, and memory card, or a communication network such as an internet.

### Brief Description of the Accompanying Drawings

Fig. 1 is a block diagram showing a configuration of a service providing system according to one or more aspects of the present invention.
Fig. 2 is a timing chart showing a procedure of providing a service according to one or more aspects of the present invention.
Fig. 3A shows XML data as a SUID for paper ascertainment according to one or more aspects of the present invention.
Fig. 3B shows a screen image displayed on a display device of an MFP based upon the XML data according to one or more aspects of the present invention.
Fig. 4A shows XML data as a SUID included in a status page according to one or more aspects of the present invention.
Fig. 4B shows a screen image displayed on the display device of the MFP based upon the XML data according to one or more aspects of the present invention.
Fig. 5A shows XML data as a SUID included in a status page according to one or more aspects of the present invention.
Fig. 5B shows a screen image displayed on the display device of the MFP based upon the XML data according to one or more aspects of the present invention.
Fig. 6A shows XML data as a SUID included in a status page according to one or more aspects of the present invention.
Fig. 6B shows a screen image displayed on the display device of the MFP based upon the XML data according to one or more aspects of the present invention.
Fig. 7 is a flowchart showing a procedure of a progress rate monitoring process 1 according to one or more aspects of the invention.
Fig. 8 is a flowchart showing a procedure of image processing 1 according to one or more aspects of the invention.
Fig. 9 is a flowchart showing a procedure of a progress rate monitoring process 2 according to one or more aspects of the invention.
Fig. 10 shows a data structure of a timing value conversion table according to one or more aspects of the invention.
Fig. 11 is a flowchart showing a procedure of image processing 2 according to one or more aspects of the invention.
Fig. 12 shows a data structure of a timing value conversion table in another illustrative embodiment according to one or more aspects of the invention.

### Detailed Description

It is noted that various connections are set forth between elements in the following description. It is noted that these connections in general and, unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

Hereinafter, illustrative aspects according to the present invention will be explained with reference to the accompanying drawings.

### (1) Overall Configuration

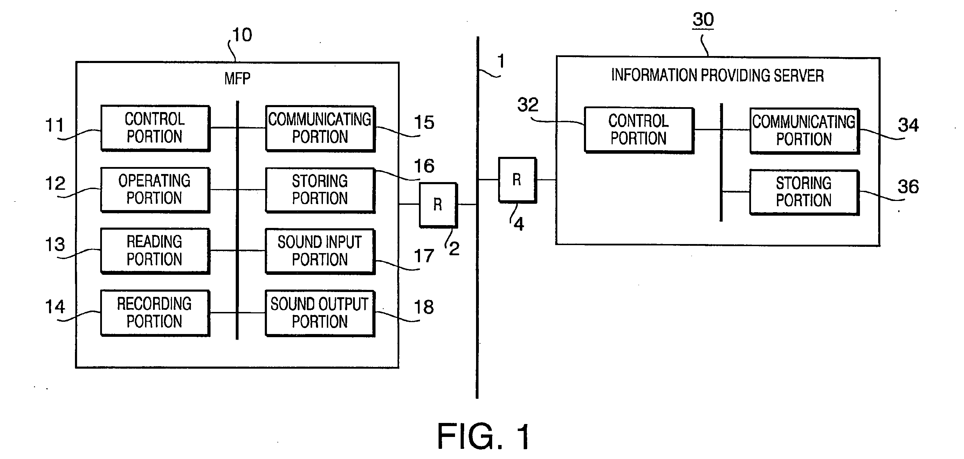

Fig. 1 is a block diagram showing a configuration of a service providing system according to one or more aspects of the present invention. As shown in Fig. 1, the service providing system includes a Multi Function Peripheral (MFP) 10, an information providing server (hereinafter, referred to as a "providing server") 30, etc. The MFP 10 and the providing server 30 are connected communicably with each other via a network 1. It is noted that the MFP 10 and the providing server 30 are connected to the network 1 via routers (known broadband routers) 2 and 4.

The MFP 10 is provided with a control portion 11, operating portion 12, reading portion 13, recording portion 14, communicating portion 15, storing portion 16, sound input portion 17, and sound output portion 18. Among them, the control portion 11 includes a CPU, ROM, and RAM, and the CPU takes overall-control of a whole of the MFP 10 according to a program stored in the ROM.

In addition the operating portion 12 is configured as a user interface that includes a copy key, scanner key, FAX key, service key, setting key, direction keys for up, down, left, and right, OK key, CANCEL key, and display device.

Further, the reading portion 13 is an input device for actualizing a function of a scanner, which reads an image on a sheet-like recording medium such as a paper to generate image data representing the image.

In addition, the recording portion 14 is an output device for actualizing a function of a printer, which prints the image represented by the image data on the recording medium such as a paper. Moreover, the communicating portion 15 connects the MFP 10 to the network 1, and executes a process for sending and receiving the data via the network 1.

Further, the storing portion 16 is configured with a non-volatile RAM (not shown) so as to store the data in the non-volatile RAM. Moreover, the sound input portion 17 receives sound from a microphone provided in a handset (receiver, not shown) included in the MFP 10 to generate sound data (PCM data) representing the sound.

The sound output portion 18 outputs the sound represented by the sound data (PCM data) from a speaker (not shown) provided in the handset, or a speaker (not shown) provided in a main body of the MFP 10.

The providing server 30 includes a control portion 32, communication portion 34, and storing portion 36. Among them, the control portion 32 is provided with a CPU, ROM, and RAM. The CPU controls a whole of the providing server 30 according to a program stored in the ROM. It is noted that the control portion 32 is configured more sophisticated than the control portion 11 of the MFP 10, so as to be able to execute a process that it is difficult for the control portion 11 of the MFP 10 to perform.

In addition, the communicating portion 34 connects the providing server 30 to the network 1, and executes a process for sending and receiving the data via the network 1. The storing portion 36 is configured with a hard disk drive (not shown) to store the data in the hard disk drive.

### (2) Providing Service by Providing Server

Data communication between the providing server 30 and a client is carried out according to such a procedure that the providing server 30 receives a request from the client and returns a response corresponding to the request. When receiving the service that the providing server 30 provides, the client establishes a session with the providing server 30, and runs a job (for receiving the service that the providing server 30 provides) in the session based upon the response from the providing server 30.

### (2-1) Procedure of Providing Service

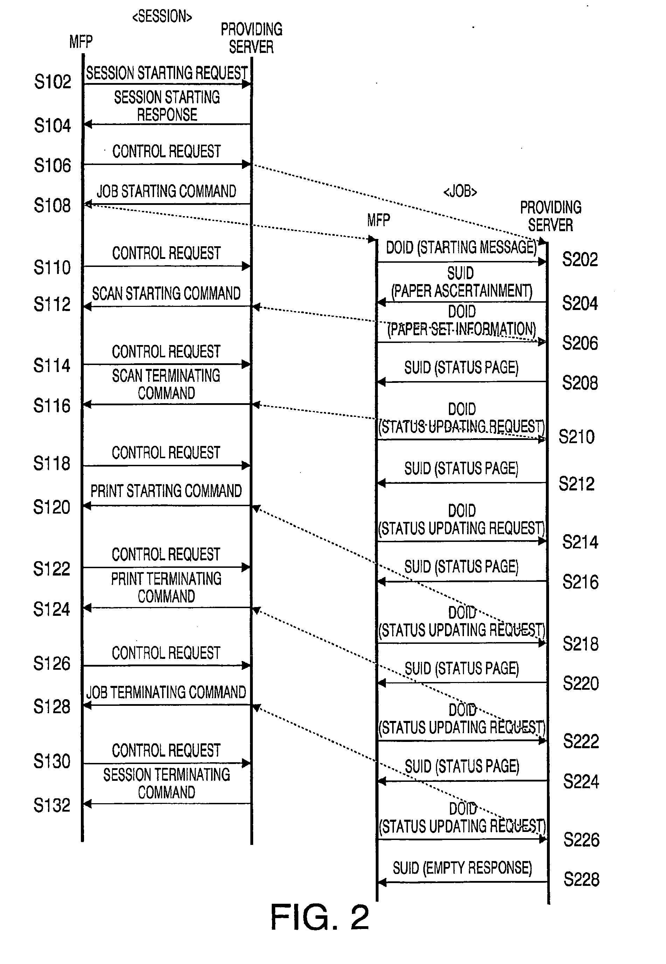

Hereinafter, a procedure of the providing server 30 providing the service to the MFP 10 as aforementioned will be explained with reference to Fig. 2.

When the MFP 10 receives the service from the providing server 30, first, a user carries out an operation of the operating portion 12 of the MFP 10 for receiving the service from the providing server 30 (for accessing the providing server 30). Thereby, a session starting request for establishing the session with the providing server 30 is sent to the providing server 30 (S102). The session with the providing server 30 is established with the MFP 10 receiving a session starting response from the providing server 30 that has received the request (S102). The session starting response is a response for informing of a session ID to be assigned to the MFP 10 that has sent the session starting request. The providing server 30 carries out a known session management based upon the session ID to maintain the session with the MFP 10. In addition, the session starting response includes XML data in which there is described in XML (extensible Markup Language) a command for instructing to send a control request that makes the user designate a kind of a service to be provided from the providing server 30 and requests to provide the service.

It is noted that, after receiving the session starting response, based upon the response from the providing server 30, the MFP 10 periodically sends a control request for inquiring whether an instruction for the MFP 10 exists to the providing server 30, and receives a command from the providing server 30 that has received the control request. At this time, if the instruction for the MFP 10 that has sent the control request does not exist, a command for informing that the instruction for the MFP 10 does not exist will be sent as a response.

Next, the MFP 10 that has received the session starting response displays a screen image for making the user designate a kind of the service on the display device of the operating portion 12 in accordance with the description of the XML data included in the response. Then, the MFP 10 transmits to the providing server 30 a control request for requesting the providing server 30 to provide the service of the kind that the user has designated (S106).

The providing server 30 that has received the control request runs a job for actualizing the service of the kind specified by the control request, and sends a job starting command for instructing the MFP 10 to run a job for actualizing the service, as a response to the control request to the MFP 10 (S108). The job starting command includes XML data in which there is described in XML a command for instructing to send as a request a starting message for running the job for actualizing the service, and requesting to begin to provide the service.

Thus, the MFP 10 that has received the job starting command runs the job for actualizing the service I accordance with the description of the XML data included in the response. It is noted that, in the following explanation, there is shown a example where the providing server 30 provides to the MFP 10 such a service that the providing server 30 makes the MFP 10 read the image data to process the read image data, and returns the processed image data to the MFP 10.

The MFP 10 that has run the job, first, transmits a DOID (Device Operation Information Description) that is a starting message for informing of the job being run as a request (S202).

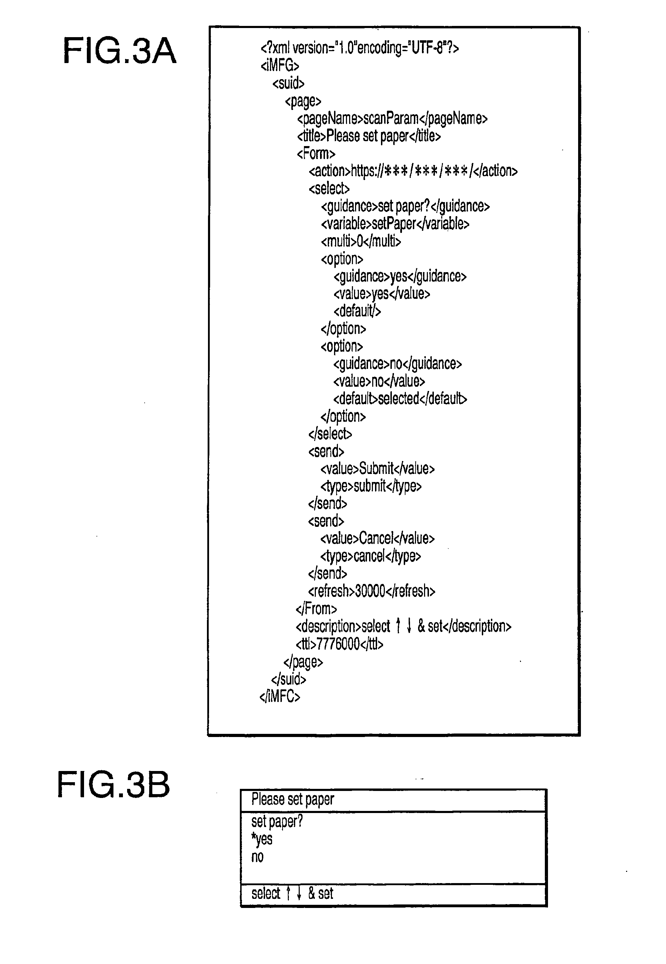

The providing server 30 that has received the DOID transmits a SUID (Service User Interface Description) that is a command (paper ascertainment) for instructing to set a manuscript to be scanned by the MFP 10 as a response to the starting message (S204). The response includes XML data in which there is described in XML a command for instructing to display a message informing that the manuscript to be read by the reading portion 13 of the MFP 10 is to be set, and to inform that the recoding medium has been set (see Fig. 3A).

The MFP 10 that has received the SUID displays the message informing that the manuscript to be read by the reading portion 13 of the MFP 10 on the display device of the operating portion 12 in accordance with the description of the XML data included in the SUID (see Fig. 3B). Subsequently, after the user has set the recording medium, and has carry out a predetermined operation of the operating portion 12, the reading portion 13 begins to read the image, and sends the DOID (paper set information) for informing that the manuscript has been set to the providing server 30 (S206).

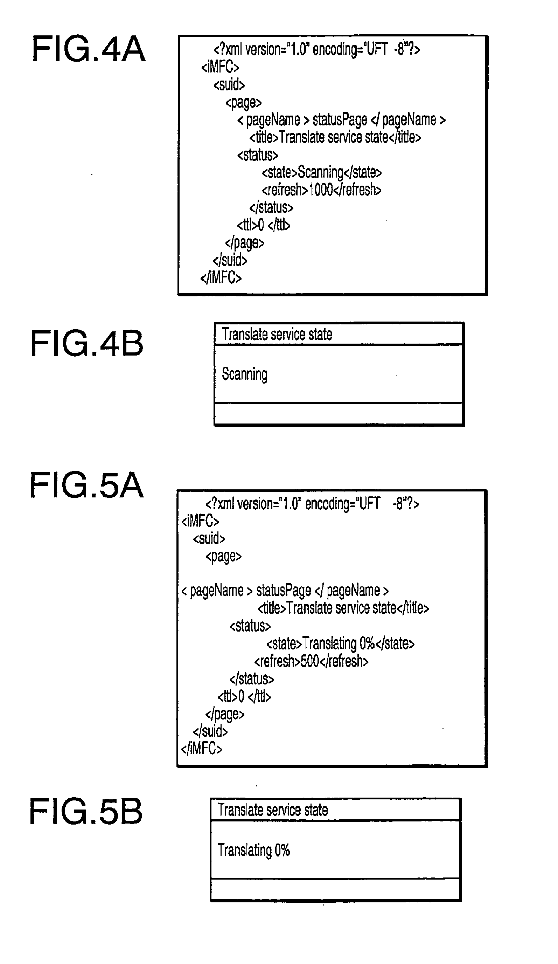

When the providing server 30 that has received the DOID receives a control request from the MFP 10 in the session at this time (S 110), the providing server 30 sends a scan starting command for making the MFP 10 begin to read the image with the reading portion 13 as a response to the control request (S 112). In addition, the providing server 30 that has received the DOID as the paper set information sends a SUID to the MFP 10 in the job as a status page for informing the MFP 10 of timing to send a next DOID (S208). As shown in Fig. 4A, the status page includes XML data where there is described in XML a command for instructing to display a display image for informing that the MFP 10 is under a scanning operation by the reading portion 13 ("<state>Scanning</state>" in Fig. 4A), and assigning the timing at which the next DOID is to be sent ("<refresh>1000</refresh>"; a unit is a [ms]). It is noted that the timing specified in the XML data is a waiting time period that is previously set as a time period considered required for scanning the image with the reading portion 13.

The MFP 10 that has received the SUID displays the display image for informing that the MFP 10 is under the scanning operation with the reading portion 13 on the display device of the operating portion 12 in accordance with the description of the XML data included in the SUID (see Fig. 4B), and, after waiting for the waiting time period specified in the description, sends a status updating request for requesting to keep providing the service as a DOID to the providing server 30 (S210). It is noted that when the timing is not specified in the XML data, or the specified waiting time period is "0", the MFP 10 does not perform the waiting operation.

When the providing server 30 that has received the DOID receives a control request from the MFP 10 in the session at this time (S 114), the providing server 30 sends a scan terminating command for terminating the scanning operation by the reading portion 13 as a response to the control request (S116). Moreover, the providing server 30 that has received the DOID as the status updating request sends a status page for instructing the MFP 10 on next timing at which a next DOID is to be sent, as a SUID to the MFP 10 (S212). The status page includes XML data where there is described in XML a command for instructing to display a display image for informing that the scanning operation by the reading portion 13 of the MFP 10 is terminated, and assigning the timing at which a next DOID is to be sent. It is noted that the timing specified in the XML data is a waiting time period that is previously set as a time period considered required for getting ready for a printing operation by the recording portion 14 after the scanning operation by the reading portion 13 has been terminated.

The MFP 10 that has received the SUID, according to the description of the XML data included in the SUID, displays the display image for informing that the scanning operation by the reading portion 13 is terminated, and, after waiting for the waiting time period specified in the description, sends a status updating request for requesting to keep providing the service as a DOID to the providing server 30 together with the image data based upon the image scanned by the reading portion 13 (S214).

The providing server 30 that has received the DOID, in the job, begins image processing for the image represented by the image data accompanying the DOID, and thereafter, sends a status page for instructing the MFP 10 on timing at which a next DOID is to be sent as a SUID to the MFP 10 together with progress information representing a progress rate of the image processing (S216). As shown in Fig. 5A, the status page includes XML data where there is described in XML a command for instructing to display the progress rate of the image processing performed by the providing server 30 ("<state>Translating 0%</state>" in Fig. 5A), and assigning the timing at which the next DOID is to be sent ("<refresh>500</refresh>" in Fig. 5A). There are set as the progress of the image processing (n %, 0 % in Fig. 5A) and the timing at which the DOID is to be sent values monitored in the below-mentioned progress rate monitoring process that depend on the progress rate of the image processing at the time of S216. This will be described in detail below.

The MFP 10 that has received the SUID, according to the description of the XML data included in the SUID, displays the progress rate of the image processing by the providing server 30 on the display device of the operating portion 12 (see Fig. 5B), and sends a status updating request for requesting to keep providing the service as a DOID to the providing server 30 after waiting for a waiting time period specified in the description.

Thus, during a time period until the image processing has been terminated after it has been started, the providing server 30 sends the SUID to the MFP 10 every time receiving the DOID from the MFP 10 in the same manner as the step of S216.

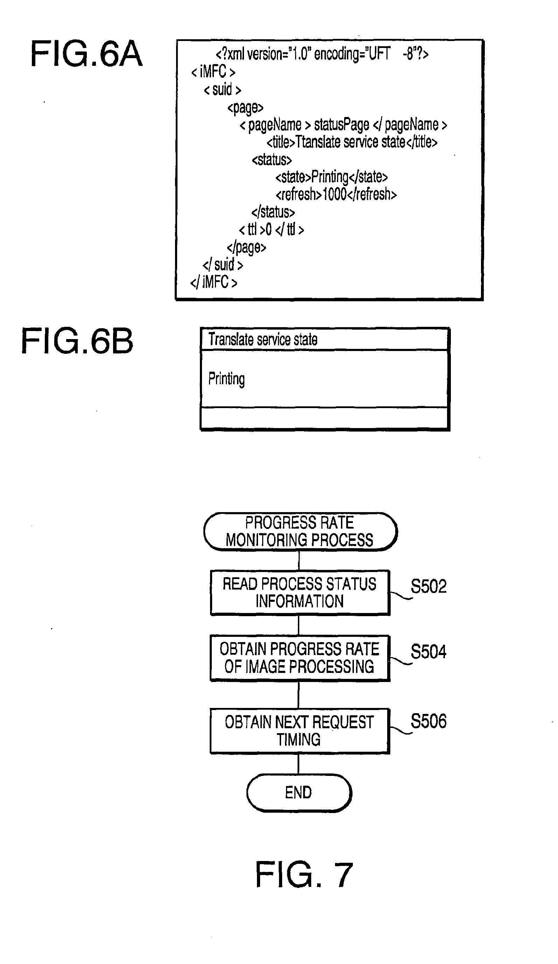

Subsequently, when the providing server 30 receives a DOID as a status updating request from the MFP 10 after terminating the aforementioned image processing (S218), the providing server 30 sends a status page for instructing the MFP 10 on timing at which a next DOID is to be sent, as a SUID to the MFP 10 accompanied by image data generated after the image processing (S220). As shown in Fig. 6A, the status page includes XML data where there is described in XML a command for instructing to display a display image for informing that the MFP 10 is under the printing operation by the recording portion 14 ("<state>Printing</state>" in Fig. 6A), and assigning the timing at which the next DOID is to be sent ("<refresh>1000</refresh>" in Fig. 6A). It is noted that the timing specified in the XML data is a waiting time period that is previously set as a time period considered required until the printing operation has been completed by the recording portion 14 after the MFP 10 has received the image data.

In addition, when the providing server 30 that has received the DOID after terminating the aforementioned image processing receives a control request from the MFP 10 in the session at this time (S 118), the providing server 30 sends a print starting command for instructing to print the image represented by the image data accompanying the SUID as a response to the MFP 10 (S120). The MFP 10 that has received the print starting command begins to print the image represented by the image data accompanying the SUID with the recording portion 14.

Next, the MFP 10 that has received the SUID as the status page in the step of S220, according to the description of the XML data included in the SUID, displays the display image for informing that the MFP 10 is under the printing operation by the recording portion 14 on the display device of the operating portion 12 (see Fig. 6B), and, after waiting for the waiting time period specified in the description, sends a status updating request for requesting to keep providing the service as a DOID to the providing server 30 (S222).

When the providing server 30 that has received the DOID receives a control request from the MFP 10 in the session at this time (S122), the providing server 30 a print terminating command for terminating the printing operation by the recording portion 14 as a response to the control request (S124). In addition, the providing server 30 that has received the DOID as the status updating request in the step of S222 sends a status page for instructing the MFP 10 on timing at which a next DOID is to be sent as a SUID to the MFP 10 in the job (S224). The status page includes XML data where there is described in XML a command for assigning the timing at which the next DOID is to be sent. It is noted that the timing specified in the XML data is a waiting time period that is previously set as a time period considered required until a next process is performed after the printing operation has been completed by the recording portion 14.

The MFP 10 that has received the SUID, according to the description of the XML data included in the SUID, waits for the waiting time period specified in the description, and thereafter, sends a status updating request for requesting to keep providing the service as a DOID to the providing server 30 (S226).

When the providing server 30 that has received the DOID receives a control request from the MFP 10 in the session at this time (S126), the providing server 30 sends a job terminating command for terminating the job as a response to the control request (S128). Further, the providing server that has received the DOID as the status updating request in the step of S226 sends an empty response having no information to the MFP 10 in the job (S228), so as to terminate the job. The MFP 10 that has received such an empty SUID terminates the job in the same way as the providing server 30.

Subsequently, when the providing server 30 receives a control request from the MFP 10 under a condition of the job being terminated (S130), the providing server 30 sends a session terminating command for breaking the session with the MFP 10 as a response to the control request (S132). Thereafter, the providing server 30 does not perform the session management based upon the session ID assigned to the MFP 10. Thereby, the session with the MFP 10 is broken.

### (2-2) Progress Rate Monitoring Process 1

Hereinafter, there will be described with reference to Fig. 7 a procedure of a progress rate monitoring process that is run when determining "n %" set as a "progress rate of the image processing" and a value set as the "timing at which the next DIOD is to be sent" in the status page transmitted from the providing server 30 in the step of S216 in Fig. 2.

When the progress rate monitoring process is run, first, as below-mentioned, process status information that is to be updated based upon the progress rate of the image processing is read out from a predetermined memory area in the storing portion 16 (S502). The process status information includes the total number of steps taken to complete the image processing, a step number of a latest step that has been completed at present time among all of the steps (hereinafter, referred to as a "completed step number"), and step processing time taken to complete a step in progress, and is updated in accordance with the progress rate of the image processing.

Next, based upon the process status information read out in the step of S502, the progress rate of the image processing is obtained (S504). In this step, there is obtained as the progress rate of the image processing a value calculated using an equation based upon the completed step number and the total number of steps in the process status information "progress rate = (completed step number / total number of steps) x 100". The value thus obtained is defined as a value representing the progress rate of the image processing "n %" in the status page (see Figs. 5A and 5B).

Then, based upon the process status information read out in the step of S502, the next request timing (the timing at which the next DOID is to be sent) is obtained (S506). In this step, step processing time in the process status information is obtained as the next request timing. The value thus obtained is defined as a value representing the timing at which the next DOID is to be sent, that is, the next request timing in the status page (see Fig. 5A).

### (2-3) Image Processing 1

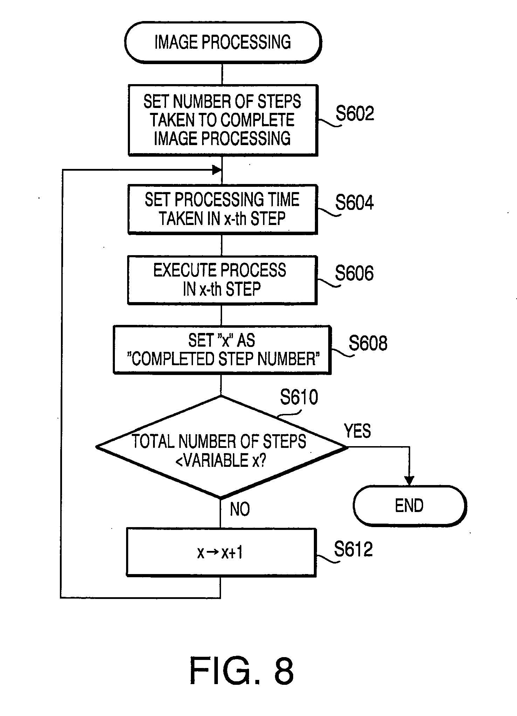

Hereinafter, there will be described with reference to Fig. 8 a procedure of the image processing run by the providing server 30 that has received the DOID from the MFP 10 in the step of S216 in Fig. 2.

When the image processing is run, firstly, the number of steps taken to complete the image processing thus run is set as the "total number of steps" included in the process status information stored in the predetermined memory area of the storing portion 16 (or generated at this time) (S602). In this case, when the image processing in the present invention is assumed to be a translating process for converting a Japanese-language text included in the image represented by the image data from the MFP 10 into another-language-translated text data, processes necessary for the translating process such as an OCR process and a process of generating print data for each page are counted as individual steps, and the total number of the counted steps is set as the aforementioned "total number of steps".

Next, there is set as "step processing time" included in the process status information processing time taken for an x-th step ("x" is a value set for a variance x whose initial value is "1") (S604). In this illustrative embodiment, there is stored in the storing portion 36 a data table where each of the steps in the image processing is registered with the processing time required therefor being associated therewith. In the step of S604, the processing time corresponding to the x-th step is acquired from the data table, and is set as the aforementioned "step processing time" of the process status information.

Next, a process in the x-th step is carried out (S606), and subsequently, "x" is set as the "completed step number" included in the process status information (S608). Thereafter, until the value of the variance x exceeds the value set as the "total number of steps" (S610: No), every time the variance x is incremented by "1" (S612), the processes in the steps of S604 to S612 are repeatedly executed. Then, when the value of the variance x exceeds the value set as the "total number of steps" (S610: Yes), the image processing is terminated.

### (3) Modification of Providing Service by Providing Server

### (3-1) Progress Rate Monitoring Process 2

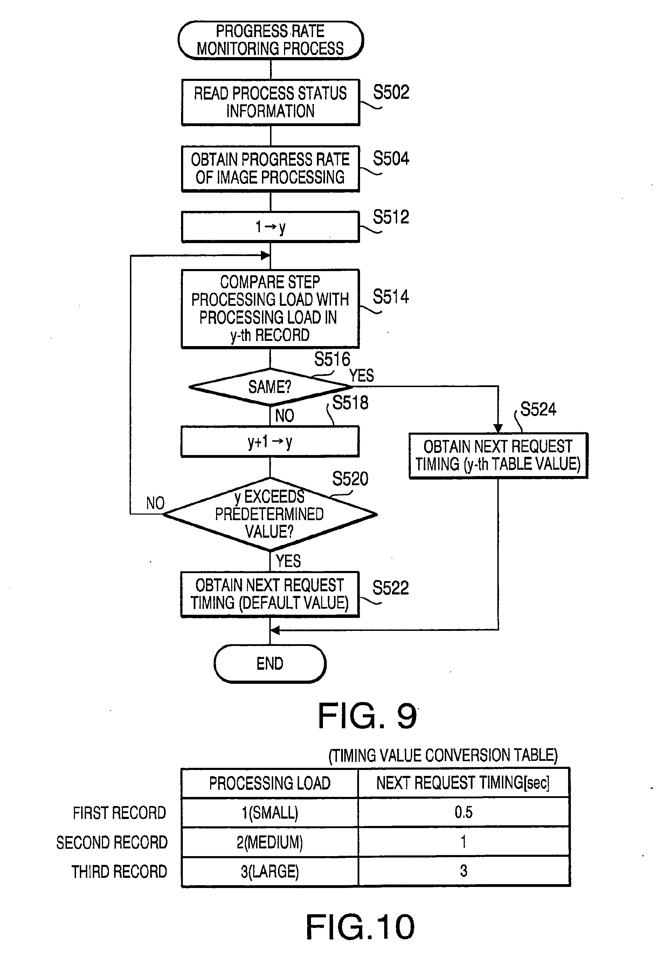

The below-mentioned process may be carried out as an alternative to the aforementioned progress rate monitoring process 1. A procedure of the process will be explained with reference to Fig. 9. It is noted that the same reference characters will be given to each of the same processes as the aforementioned progress rate monitoring process 1, and a detailed explanation about it will be omitted.

When the progress rate monitoring process is run, firstly, process status information that is to be updated based upon the progress rate of the image processing is read out from a predetermined memory area of the storing portion 16 (S502).

Next, based upon the process status information read out in the step of S502, the progress rate of the image processing is obtained (S504). The process status information includes the total number of steps, the completed step number, and the step processing load in a step in progress, and is updated in accordance with the progress rate of the image processing. It is noted that the step processing load represents a processing load in a step in progress, and any of 1 to 3 (1: small, 2: medium, and 3: large) is set therefor depending on its magnitude.

Next, "1"is set for a variance y (S512). Subsequently, a value set for the step processing load included in the process status information is compared with a value representing the processing load of a y-th record in a "timing value conversion table" (S514). The "timing value conversion table" is a data table, stored in with next request timing associated with each of the processing loads of 1 to 3. In fist, second, and third records, there are registered request timings corresponding to the processing loads of 1, 2, and 3, respectively. It is noted that each of the request timings registered in the timing value conversion table may be a predetermined value, or may dynamically vary depending on conditions such as the number of clients that establish the session with the providing server 30 and traffic of the network.

As a result of the comparing operation in the step of S514, when the step processing load is not the same as the processing load in the y-th record (S516: No), the variance y is incremented by "1" (S518), and thereafter, it is judged whether the variance y exceeds a predetermined value of "3" (S520).

When it is not judged that the variance y exceeds the predetermined value in the step of S520 (S520: No), the process goes back to the step of S514. Meanwhile, when it is judged that the variance y exceeds the predetermined value (S520: Yes), the next request timing (the timing at which the next DOID is to be sent) is determined to be a predetermined default value (3000 ms in this illustrative embodiment) (S522), and subsequently, the progress rate monitoring process is terminated. The value determined in this way is a value representing the timing at which the next DOID is to be sent, i.e., the next request timing (see Fig. 5A).

On the other hand, as a result of the comparing operation in the step of S514, when the step processing load is the same as the processing load in the y-th record (S516: Yes), the next request timing (the timing at which the next DOID is to be sent) is determined to be the request timing registered as the y-th record in timing value conversion table (S524), and thereafter, the progress rate monitoring process is terminated. The value determined in this way is a value representing the timing at which the next DOID is to be sent, i.e., the next request timing in the status page (see Fig. 5A).

### (3-2) Image Processing 2

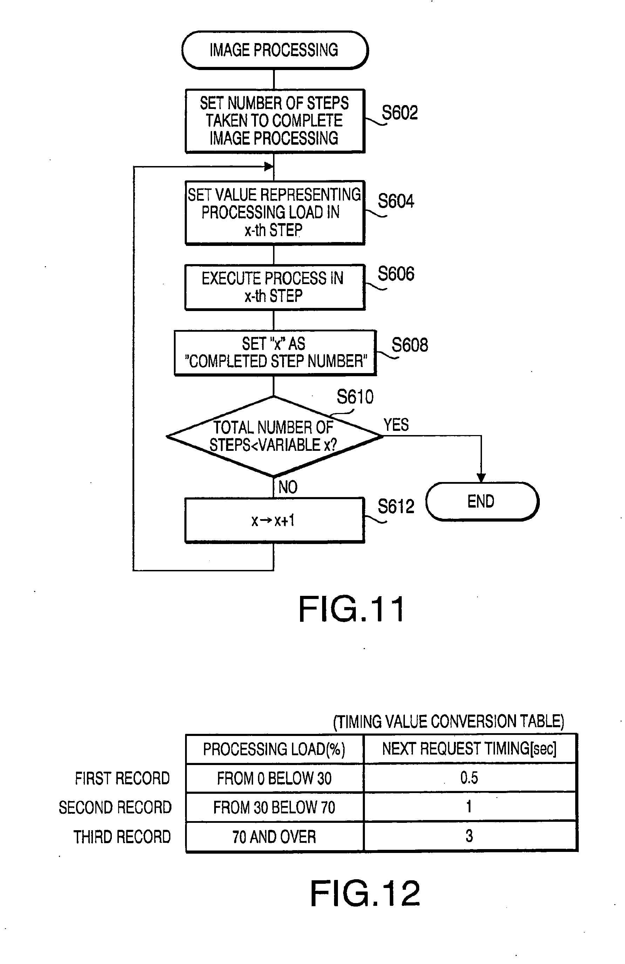

When executing the aforementioned progress rate monitoring process 2, a process as shown below may be executed instead of the aforementioned image processing 1. The procedure of the process will be explained with reference to Fig. 11. It is noted that the same reference character will be given to each of the same process as the aforementioned image, and a detailed explanation thereof will be omitted.

When the image processing is run, firstly, there is set as the "total number of steps" included in the process status information stored in a predetermined memory area of the storing portion 16 (or, generated at this time) the number of steps taken to complete the image processing thus run (S602).

Next, there is set as a "step processing load" a value (1: small, 2: medium, 3: large) that represents a processing load in the x-th step (S622). In this illustrative embodiment, in the storing portion 36, there is stored a data table in which each of the steps in the image processing is registered associated with the processing load required therefor. In the step of S612, a processing load corresponding to the x-th step is chosen from the data table, and set as the step processing load of the process status information.

Next, a process based upon the x-th step is executed (S606), and thereafter, "x" is set as the "completed step number" included in the process status information (S608). Subsequently, until the value of the variance x exceeds the value set as the "total number of steps" (S610: No), every time the variance x is incremented by "1" (S612), the processes in the steps of S622 to S612 are repeatedly executed. Then, when the value of the variance x exceeds the value set as the "total number of steps" (S610: Yes), the image processing is terminated.

### Operations and Effects

According to the service providing system thus configured, after receiving the request for providing the service from the client (the session starting request, the control request in the step of S 106 in Fig. 2), the providing server 30 sends various kinds of responses and SUIDs to the clients to provide the service. In the processes of sending a plurality of SUIDs until the providing server 30 completes providing the service, there is added to each of the SUIDs the time information (the value sandwiched between the <refresh> tags in the XML data) that represents the next request timing (the timing at which the next DOID is to be sent). In the processes of sending a plurality of DOIDs until the MFP 10 completes receiving the service, when receiving the SUID transmitted from the providing server 30, the MFP 10 sends the next DOID in accordance with the time information added to the SUID.

Thus, the providing server 30 can assign the timing at which the next DOID is to be sent to the client that is determined convenient for the providing server 30 thereby with the time information being added to the SUID to be sent to the client. Thereby, the client sends the next DOID in accordance with the time information added to the SUID.

Therefore, by sending the SUID to which the time information is added, the providing server 30 can receive the next DOID at convenient timing therefor, and it is possible to optimize timing at which the providing server 30 collects the DOIDs from the client. In other words, immediately after the process is completed by the providing server 30, the service to be provided is available for the client, and it is possible to allow the service being provided to proceed according to the appropriate timetable.

In addition, in the progress rate monitoring process 1, the value set as the "step processing time" of the process status information in the image processing 1 is added to the SUID as next request timing. Since the processing time corresponding to the step being executed at the present time is chosen from the data table in which each of the steps in the image processing is registered associated with the processing time required therefor to set in the "step processing time", the next request timing to be added to the SUID as the time information can be determined from the processing time stored in the data table. Since there is stored in the data table the processing load in each of the steps associated with the time information that represents the timing at which the DOID is to be sent from the client to the providing server, the timing at which the DOID is to be sent from the client can be more delayed, as the SUID is sent while a step of a higher processing load that requires longer time to be completed is being executed. Namely, the service providing system is configured such that the DOID is received at such timing that the providing server 30 can sufficiently meet the DOID.

Further, in the progress rate monitoring process 2, the value, which is registered in the timing value conversion table associated with the value set as the "step processing load" of the process status information in the image processing 2, is added to the SUID as next request timing. As the "step processing load", there is set request timing corresponding to a processing load in a step executed in the present time that is chosen from the data table in which each of the processing loads in the image processing is associated with the request timing. Therefore, the next request timing added to the SUID as the time information can be determined from the processing time stored in the data table. There is stored in the data table the waiting time periods associated with the processing loads such that a longer waiting time period is set for a step of a larger processing load. Thereby, as the SUID is sent while a step of a higher processing load that longer time is required to complete is being executed, the timing at which the DOID is to be sent from the client is more delayed, so that the providing server 30 can receive the request signal at such timing that the providing server 30 sufficiently meets the request signal.

### (5) Modifications

Hereinabove, the illustrative embodiment according to one or more aspects of the present invention has been described. However, the present invention is not limited to the aforementioned illustrative embodiment, and it is needless to say that various kinds of modifications may be possible as far as they are within a scope of the present invention.

In the aforementioned illustrative embodiment, there has been exemplified the providing server 30 configured to instruct the client on the next request timing in the data communication in the job. However, when the providing server 30 instructs the client on the next request timing may be not only in the data communication in the job, but also in the data communication in the session (the timing of the request), or in the data communication when the job is run (the timing at which the starting message is to be sent).

Further, in the aforementioned illustrative embodiment, there is exemplified the case where such a service that the providing server 30 returns to the MFP 10 the image data that the providing server 30 has made the reading portion 13 of the MFP 10 scan after performing the image processing for the image data is provided to the MFP 10. However, services that the providing server 30 provides to the MFP 10 are not limited to such a service. For example, such a service that the providing server 30 provides predetermined contents to the MFP 10, and makes the MFP 10 print the contents may be possible.

Further, in the aforementioned illustrative embodiment, there is exemplified the progress rate monitoring process is configured to be executed based upon the values representing the processing load largeness (1 to 3) that are registered in the timing value conversion table. However, the progress rate monitoring process may be configured to be executed based upon values representing respective processing load rates (CPU usage rates) of the control portion 11 included in the providing server 30 that are registered in the timing value conversion table, for example, as shown in Fig. 12, instead of the processing load largeness. In this case, the process status information includes the total number of steps, completed step number, and processing load rate of a step in progress. In the progress rate monitoring process, firstly, in the step of S514, it is judged whether a value set as the processing load rate included in the process status information is within a range of the processing load in the y-th record in the timing value conversion table. As a result of the judgment, when the value set as the processing load rate is not within the range, the process goes to the step of S518. Meanwhile, when the value set as the processing load rate is within the range, the process goes to the step of S524.

Further, in the aforementioned illustrative embodiment, there is exemplified the time information, which the providing server 30 added to the SUID, configured as waiting time period required until the client sends the DOID. However, the time information that the providing server 30 adds to the SUID may be information that represents the timing at which the next DOID is to be sent other than the waiting time period. For example, information that represents clock time when the next DOID is to be sent may be possible.

Further, in the aforementioned illustrative embodiment, there are shown the configurations of various kinds of data tables being stored in the storing portion 36 of the providing server 30. However, a part or all of the data tables may be provided in another network device capable of data communication with the providing server 30. In this case, the providing server 30 may be configured to indirectly access the data tables through the data communication with the network device.

## Claims

1. A service providing system, comprising:
a providing server configured to provide at least one service; and
a client configured to receive the at least one service to be provided from the providing server,
wherein the providing server includes:
a first receiving system configured to receive a request signal for requesting the providing server to provide a service;
a first sending system configured to send a response signal for providing the service to the client in response to the request signal being received by the first receiving system; and
a time information adding system configured to add time information that represents timing at which a next request signal is to be sent to the response signal that is sent from the first sending system when requesting the client to continuously send the request signal for requesting to provide the service, and
wherein the client includes:
a second sending system configured to send the request signal to the providing server;
a second receiving system configured to receive the response signal sent from the providing server; and
a control system configured to control the second sending system to send the request signal at the timing represented by the time information included in the response signal received by the second receiving system.

2. The service providing system according to claim 1,
wherein the providing server further includes a database storing the time information corresponding to each of processes to be executed while providing the service associated with each of the processes, and
wherein the time information adding system is configured to judge which process among the processes to be executed while providing the service the response signal is to be sent from the first sending system in, and add the time information stored in the database associated with the process specified by the judgment to the response signal.

3. The service providing system according to claim 1 or 2,
wherein the providing server further includes:
a load rate detecting system configured to detect a rate of a load for a processing capacity of the providing server;
a load rate judging system configured to judge which range among a plurality of ranges predetermined on the basis of a level of the rate of the load for the processing capacity of the providing server the rate detected the load rate detecting system is in; and
a database in which the time information determined depending on each of the plurality of ranges is stored associated with each of the plurality of ranges, and
wherein the time information adding system is configured to determine the time information stored associated with the range specified by the load rate judging system in the database as the time information to be added.

4. A service providing system, comprising:
a providing server configured to provide at least one service; and
a client configured to receive the at least one service to be provided from the providing server,
wherein the providing server includes:
a starting command sending system configured to return a first execution command for instructing to execute a process to be executed by the client for starting to provide a service, in response to a starting request for requesting to start to provide the service being received from the client;
a continuing command sending system configured to sequentially return one of second execution commands for instructing to execute a corresponding one of processes to be executed by the client to receive the service to be provided every time receiving a continuing request for requesting to continue to provide the service from the client until having returned all of the second execution commands corresponding to all of the processes to be executed by the client to receive the service to be provided after the starting command sending system has returned the starting command; and
a time information adding system configured to add time information that represents timing at which a next continuing request is to be sent to the second execution command returned from the continuing command sending system when requesting the client to continuously send the continuing request for requesting to continue to provide the service, and
wherein the client includes:
a starting request sending system configured to send the starting request to the providing server;
a continuing request sending system configured to send the continuing request for requesting to continue to provide the service to the providing server, in response to the one of the processes corresponding to the second execution command having been completed in the case where the providing server has started to provide the service based on the starting request being sent from the starting request sending system; and
a process executing system configured to execute a process corresponding to one of the first execution command returned by the starting command sending system in response to the starting request being sent from the stating request sending system and the second execution command returned by the continuing command sending system in response to the continuing request being sent from the continuing request sending system, and
wherein the continuing request sending system is configured to send the continuing request to the providing server in accordance with the time information added to the second execution command, when the process corresponding to the second execution command has been completed.

5. The service providing system according to claim 4,
wherein the providing server further includes a database storing the time information corresponding to each of processes to be executed while providing the service associated with each of the processes, and
wherein the time information adding system is configured to judge which process among the processes to be executed to receive the service the second execution command is to be sent from the continuing command sending system in, and add the time information stored in the database associated with the process specified by the judgment to the second execution command returned by the continuing command sending system.

6. The service providing system according to claim 4 or 5,
wherein the providing server further includes:
a load rate detecting system configured to detect a rate of a load for a processing capacity of the providing server;
a load rate judging system configured to judge which range among a plurality of ranges predetermined on the basis of a level of the rate of the load for the processing capacity of the providing server the rate detected the load rate detecting system is in; and
a database in which the time information determined depending on each of the plurality of ranges is stored associated with each of the plurality of ranges, and
wherein the time information adding system is configured to determine the time information stored associated with the range specified by the load rate judging system in the database as the time information to be added.

7. A client configured to communicate with a providing server that is configured to provide a service in response to a request signal for requesting to provide the service, the providing server being configured to add time information representing timing at which a next request signal is to be sent to a response signal for requesting the client to continuously send the request signal when providing the service, the client comprising:
a sending system configured to send the request signal to the providing server;
a receiving system configured to receive the response signal sent from the providing server; and
a control system configured to control the sending system to send the request signal at the timing represented by the time information included in the response signal received by the receiving system.

8. A providing server configured to communicate with a client that is configured to send a request signal for requesting to provide a service, comprising:
a receiving system configured to receive the request signal;
a sending system configured to send a response signal for providing the service to the client in response to the request signal being received by the receiving system; and
a time information adding system configured to add time information that represents timing at which a next request signal is to be sent to the response signal that is sent from the sending system when requesting the client to continuously send the request signal for requesting to provide the service.

9. A computer program product comprising instructions configured readable by a computer, the computer being configured to communicate with a providing server configured to provide a service in response to a request signal for requesting to provide the service, the providing server being configured to add time information representing timing at which a next request signal is to be sent to a response signal for requesting to continuously send the request signal when providing the service, the instructions causing the computer to serve as:
a sending system configured to send the request signal to the providing server;
a receiving system configured to receive the response signal sent from the providing server; and
a control system configured to control the sending system to send the request signal at the timing represented by the time information included in the response signal received by the receiving system.

10. A computer program product comprising instructions configured readable by a computer that is configured to communicate with a client configured to send a request signal for requesting to provide a service, the instructions causing the computer to serve as:
a receiving system configured to receive the request signal;
a sending system configured to send a response signal for providing the service to the client in response to the request signal being received by the receiving system; and
a time information adding system configured to add time information that represents timing at which a next request signal is to be sent to the response signal that is sent from the sending system when requesting the client to continuously send the request signal for requesting to provide the service.
